(19) Europäisches Patentamt
European Patent Office
Office européen des brevets

(11) **EP 4 682 823 A1**

(12) **DEMANDE DE BREVET EUROPEEN**

(43) Date de publication:
**21.01.2026 Bulletin 2026/04**

(21) Numéro de dépôt: **25190302.7**

(22) Date de dépôt: **17.07.2025**

(51) Classification Internationale des Brevets (IPC):
***G06T 7/00*** *(2017.01)*

(52) Classification Coopérative des Brevets (CPC):
**G06T 7/0012;** G06T 2207/10056;
G06T 2207/20081; G06T 2207/20084;
G06T 2207/20212; G06T 2207/30241

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.07.2024 FR 2407923**

(71) Demandeur: **Commissariat à l'Energie Atomique et aux Energies Alternatives**
**75015 Paris (FR)**

(72) Inventeurs:
- **MANDULA, Ondrej**
  **38054 Grenoble Cedex 09 (FR)**
- **GODEFROY, Guillaume**
  **38054 Grenoble Cedex 09 (FR)**
- **CIONI, Olivier**
  **38054 Grenoble Cedex 09 (FR)**

(74) Mandataire: **INNOV-GROUP**
**209 Avenue Berthelot**
**69007 Lyon (FR)**

(54) **PROCÉDÉ DE CARACTÉRISATION DE LA TRAJECTOIRE D'UNE PARTICULE MOBILE DANS UN ÉCHANTILLON**

(57) Procédé de caractérisation d'au moins une particule mobile ($10_i$) dans un échantillon (10), le procédé comportant:

a) acquisition d'au moins une image ($I$, $I_n$) de l'échantillon durant une période d'acquisition, à l'aide d'un capteur d'image (20), définissant un champ d'observation, la période d'acquisition comportant différents instants d'acquisition ($t_n$);

b) à l'aide de l'image ou de chaque image résultant de a), formation d'une image de trajectoires (I) représentant les particules de l'échantillon, dans le champ d'observation, aux différents instants d'acquisition ;

c) utilisation de l'image de trajectoires résultant de b) en tant qu'image d'entrée d'un algorithme de détection, programmé pour détecter des particules, et d'un algorithme d'intelligence artificielle à apprentissage supervisé, programmé calculer au moins un paramètre moyen de déplacement pour différentes particules détectées.

**Description**

## DOMAINE TECHNIQUE

Le domaine technique de l'invention est l'observation de particules microscopiques mobiles ou motiles dans un échantillon, en vue de leur caractérisation. Une application visée est la caractérisation de spermatozoïdes.

## ART ANTERIEUR

L'observation de particules cellulaires motiles, telles des spermatozoïdes, dans un échantillon, est usuellement effectuée à l'aide d'un microscope. Le microscope comporte un objectif définissant un plan objet, s'étendant dans l'échantillon, ainsi qu'un plan image, confondu avec un plan de détection d'un capteur d'image. Le microscope effectue des images des spermatozoïdes selon une configuration focalisée. Le choix d'une telle modalité suppose un compromis entre la résolution spatiale, le champ observé et la profondeur de champ.

La demande de brevet US20240044771 décrit un procédé permettant une caractérisation de spermatozoïdes en utilisant un dispositif d'acquisition d'image formant des données d'entrée d'un réseau de neurones. Le dispositif d'acquisition peut être de type imagerie défocalisée ou sans lentille.

La publication Pranshul S. "Deep particle diffusometry : convolutional neural networks for particle diffusometry in the presence of flow and thermal gradients", Measurement Science and Technology, IOP, Bristol, GB, vol. n°3, 11, decembre 2023, décrit un procédé permettant de caractériser la diffusion dans un fluide. Il s'agit en particulier de quantifier un coefficient de diffusion. L'objectif est de caractériser le fluide, en suivant une trajectoire des particules. Il est mentionné que ce procédé convient à une faible concentration de particules. En outre, un tel procédé n'est applicable qu'en présence de particules immobiles par rapport au fluide, puisque le mouvement du fluide est supposé correspondre au mouvement des particules.

La publication Ershov D "TrackMate 7 : integrating state of art segmentation algorithms into tracking pipelines". Nat Methods 19, 829-832 (2002) décrit une application permettant de suivre des particules mobiles, par exemple des cellules, et de déterminer leurs caractéristiques morphologiques. Les particules étant mobiles, la pratique consiste à acquérir un grand nombre d'images. Sur chaque image, les particules doivent être détectées et repérées, de façon à suivre leur trajectoire, de façon à déterminer leurs déplacements.

Cependant, les procédés de caractérisation actuels sont coûteux en terme de temps de calcul, en particulier lorsque le nombre de particules est élevé. On estime que le temps pour suivre chaque particule varie, en fonction du nombre $N$ de particules, en $N^3 \log(N)$. Et cela sur chaque image. Le temps de calcul peut dépasser quelques dizaines de secondes lorsque $N$ est de plusieurs milliers. A cela s'ajoutent les traitements pour caractériser les particules.

L'inventeur propose un procédé plus frugal en terme de temps de calcul, permettant de réduire la durée de l'analyse. Le procédé est particulièrement adapté à la caractérisation d'échantillons comportant un grand nombre de cellules.

## EXPOSE DE L'INVENTION

Un premier objet de l'invention est un procédé de caractérisation d'au moins une particule mobile dans un échantillon, le procédé comportant:

a) acquisition d'au moins une image de l'échantillon durant une période d'acquisition, à l'aide d'un capteur d'image, définissant un champ d'observation, la période d'acquisition comportant différents instants d'acquisition;
b) à l'aide de l'image ou de chaque image résultant de a), formation d'une image de trajectoires représentant les particules de l'échantillon, dans le champ d'observation, aux différents instants d'acquisition ;
c) utilisation de l'image de trajectoires résultant de b) en tant qu'image d'entrée d'un algorithme de détection, programmé pour détecter les particules, et d'un algorithme d'intelligence artificielle à apprentissage supervisé, programmé calculer au moins un paramètre moyen de déplacement pour différentes particules détectées.

L'algorithme d'intelligence artificielle à apprentissage supervisé peut être un réseau de neurones convolutif.

Selon une possibilité, chaque image de l'échantillon est acquise selon une modalité d'imagerie défocalisée ou selon une modalité d'imagerie sans lentille, de façon que chaque particule forme, sur chaque image, une figure de diffraction.

Selon une possibilité:

- l'échantillon s'étend selon un plan de l'échantillon ;
- le capteur d'image s'étend selon un plan de détection;
- un système optique s'étend entre l'échantillon et le capteur d'image, le système optique définissant un plan objet et un plan image;
- le plan objet est décalé par rapport au plan de l'échantillon d'une distance de défocalisation objet et/ou le plan image est décalé par rapport au plan de l'échantillon d'une distance de défocalisation image, de façon que lors de l'étape a), chaque image de l'échantillon est acquise selon une modalité d'imagerie défocalisée.

Selon une possibilité, aucune optique de formation d'image ne s'étend entre l'échantillon et le capteur d'image, de façon que lors de l'étape a), chaque image de l'échantillon est acquise selon une modalité d'imagerie sans lentille.

Selon une possibilité, chaque image de l'échantillon est acquise selon une modalité d'imagerie interférentielle.

Selon une possibilité:

- l'étape (a) comporte une acquisition de plusieurs images ;
- dans l'étape (b), l'image de trajectoires est obtenue par une combinaison des images acquises lors de l'étape (a).

La combinaison peut être ou comporter une somme.

Selon une possibilité :

- chaque image acquise et l'image de trajectoires étant définie selon des pixels ;
- la valeur de l'image de trajectoires pour un pixel, est la valeur maximale, audit pixel, de l'ensemble des images acquises.

Selon une possibilité :

- chaque image acquise et l'image de trajectoires étant définie selon des pixels ;
- la valeur de l'image de trajectoires pour un pixel, est la valeur maximale, audit pixel, de l'ensemble des images acquises.

Selon une possibilité :

- l'étape (a) comporte une acquisition de plusieurs images ;
- un algorithme de reconstruction holographique est appliqué à chaque image acquise, de façon à former, à partir de chaque image acquise, une image reconstruite,
- dans l'étape (b), l'image de trajectoires est obtenue par une combinaison des images reconstruites. La combinaison peut être ou comporter ou être une somme.

Selon une possibilité :

- au cours de l'étape (a), l'image est acquise tandis que l'échantillon est soumis à plusieurs illuminations successives, chaque illumination étant effectuée à un instant d'acquisition ;
- l'image de trajectoires correspond à l'image acquise lors de l'étape (a).

Selon une possibilité, l'étape c) comporte à partir de l'image de trajectoires :

- une détermination d'au moins une caractéristique moyenne des trajectoires des particules durant la période d'acquisition;
- et/ou un calcul d'une vitesse moyenne des particules à partir de la trajectoire.

Selon une possibilité, les particules sont des spermatozoïdes.

Un deuxième objet de l'invention est un dispositif d'observation d'un échantillon, l'échantillon comportant des particules mobiles, le dispositif comportant :

- une source de lumière, configurée pour illuminer l'échantillon ;
- un capteur d'image, configuré pour former une image de l'échantillon ;
- une structure de maintien, configurée pour maintenir l'échantillon entre la source de lumière et le capteur d'image ;
- une unité de traitement, reliée au capteur d'image, et configurée pour mettre en œuvre les étapes b) et c) d'un procédé selon le premier objet de l'invention à partir d'au moins une image acquise par le capteur d'image.

L'invention sera mieux comprise à la lecture de l'exposé des exemples de réalisation présentés, dans la suite de la description, en lien avec les figures listées ci-dessous.

## FIGURES

La figure 1 représente un premier mode de réalisation de dispositif permettant une mise en œuvre de l'invention.

La figure 2 représente un deuxième mode de réalisation de dispositif permettant une mise en œuvre de l'invention.

La figure 3 schématise une trajectoire d'un spermatozoïde.

La figure 4 montre les principales étapes d'un procédé de caractérisation de particules mobiles dans l'échantillon.

La figure 5A montre différentes images d'un échantillon, acquises en différentes instants

La figure 5B montre une image de trajectoires obtenue à partir d'images acquises en différents instants.

La figure 6 montre une confrontation de mesures obtenues en mettant en œuvre l'invention avec des données réelles (vérité terrain). La figure 6 est divisée en 10 figures élémentaires 6A à 6J, qui adressent chacune une caractéristique mesurée. La figure 6A montre le nombre de spermatozoïdes dénombrés dans le champ d'observation. Les figures 6B à 6F concernent des caractéristiques de trajectoires de spermatozoïde. Les figures 6G à 6J concernent des proportions de spermatozoïdes classés par type dans les différents échantillons analysés.

La figure 7 est divisée en 10 figures élémentaires 7A à 7J, chaque figure élémentaire étant une représentation de Bland-Altman des données respectivement représentées sur les figures 6A à 6J.

Les figures 8A et 8B montrent des images acquises pour différentes concentrations de spermatozoïdes.

La figure 9 est divisée en sept figures élémentaires 9A à 9G. Les figures 9A, 9B et 9C montrent des images acquises dans différentes conditions. Les images 9D, 9E et 9F montrent des images intégrées obtenues respectivement à partir d'images représentées sur les figures 9A, 9B et 9C.

La figure 9G montre une image de trajectoires obtenue par une combinaison des maximas d'images élémentaires.

## EXPOSE DE MODES DE REALISATION PARTICULIERS

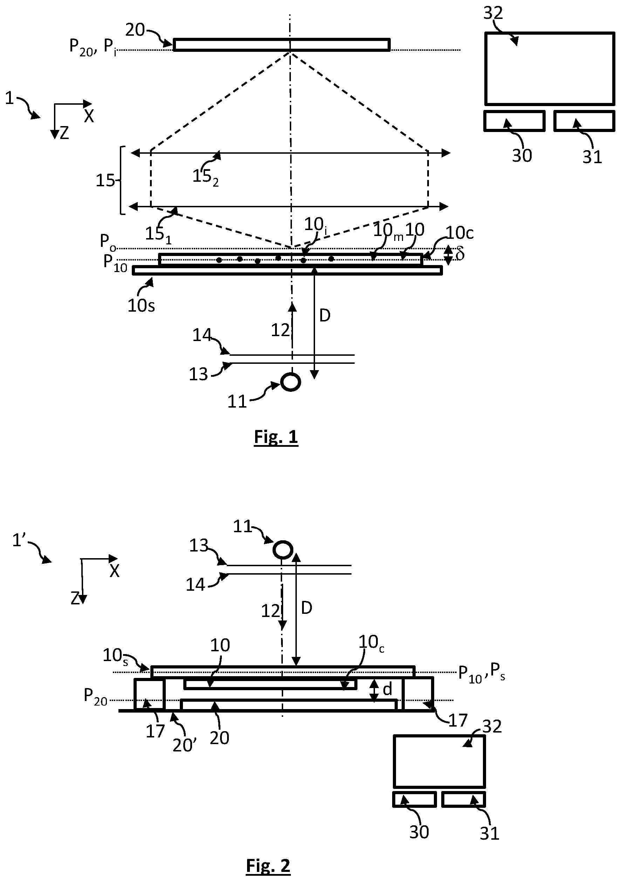

On a représenté, sur la figure 1, un premier mode de réalisation d'un dispositif 1 permettant une mise en œuvre de l'invention. Selon ce premier mode de réalisation, le dispositif permet l'observation d'un échantillon 10 interposé entre une source de lumière 11 et un capteur d'image 20. La source de lumière 11 est configurée pour émettre une onde lumineuse incidente 12 se propageant jusqu'à l'échantillon parallèlement à un axe de propagation Z.

Le dispositif comporte un support d'échantillon 10s configuré pour recevoir l'échantillon 10, de sorte que l'échantillon soit maintenu sur le support 10s. L'échantillon ainsi maintenu s'étend selon un plan, dit plan d'échantillon $P_{10}$. Le plan de l'échantillon correspond par exemple à un plan moyen autour duquel s'étend l'échantillon 10. Le support d'échantillon peut être une lame de verre, par exemple d'épaisseur 20 $\mu$m. L'épaisseur peut être comprise entre 10 $\mu$m et 1 mm, et de préférence entre 10 $\mu$m et 500 $\mu$m ou entre 10 $\mu$m et 100 $\mu$m.

L'échantillon comprend notamment un milieu liquide $10_m$ dans lequel baignent des particules mobiles et éventuellement motiles $10_i$. Le milieu $10_m$ peut être un liquide biologique ou un liquide tampon. Il peut par exemple comporter un liquide corporel, à l'état pur ou dilué. Par liquide corporel, on entend un liquide généré par un corps vivant. Il peut en particulier s'agir, à titre non limitatif, de sang, d'urine, de liquide céphalorachidien, de sperme, de lymphe.

L'échantillon 10 est de préférence contenu dans une chambre fluidique $10_c$. La chambre fluidique est par exemple une chambre fluidique d'épaisseur, comprise entre 20 $\mu$m et 100 $\mu$m. L'épaisseur de la chambre fluidique, et donc de l'échantillon 10, selon l'axe de propagation Z, varie typiquement entre 10 $\mu$m et 200$\mu$m, et est de préférence comprise entre 20 $\mu$m et 50 $\mu$m $\mu$m.

Un des objectifs de l'invention est la caractérisation de particules en mouvement dans l'échantillon.

Dans l'exemple de réalisation décrit, les particules mobiles sont des spermatozoïdes. Dans ce cas, l'échantillon comporte du sperme, éventuellement dilué. Dans ce cas, la chambre fluidique $10_c$ peut être une chambre de comptage dédiée à l'analyse de la mobilité ou de la concentration de cellules. Il peut par exemple s'agir d'une chambre de comptage commercialisées par Leja, d'épaisseur comprise entre 20 $\mu$m et 100 $\mu$m.

Selon d'autres applications, l'échantillon comporte des particules mobiles, par exemple des microorganismes, par exemple microalgues ou plancton, ou des cellules, par exemple des cellules en cours de sédimentation.

La distance D entre la source de lumière 11 et l'échantillon 10 est de préférence supérieure à 1 cm. Elle est de préférence comprise entre 2 et 30 cm, par exemple 5 cm. Avantageusement, la source de lumière 11, vue par l'échantillon, est considérée comme ponctuelle. Cela signifie que son diamètre (ou sa diagonale) est préférentiellement inférieur au dixième, mieux au centième de la distance entre l'échantillon et la source de lumière.

La source de lumière 11 est par exemple une diode électroluminescente. Dans l'exemple décrit, la lumière est émise selon une la longueur d'onde de 450 nm. Elle est de préférence associée à un diaphragme 14, ou filtre spatial. L'ouverture du diaphragme est typiquement comprise entre 5 $\mu$m et 1 mm, de préférence entre 50 $\mu$m et 1 mm. Dans cet exemple, le diaphragme a un diamètre est de 400 $\mu$m. Selon une autre configuration, le diaphragme peut être remplacé par une fibre optique, dont une première extrémité est placée face à la source de lumière et dont une deuxième extrémité est placée en regard de l'échantillon 10. Le dispositif peut également comporter un diffuseur 13, disposé entre la source de lumière 11 et le diaphragme 14. Le recours à un assemblage diffuseur/diaphragme est par exemple décrit dans US10418399.

Le capteur d'image 20 est configuré pour former une image de l'échantillon selon un plan de détection $P_{20}$. Dans l'exemple représenté, le capteur d'image 20 comporte une matrice de pixels, de type CCD ou un CMOS. Le plan de détection $P_{20}$ s'étend de préférence perpendiculairement à l'axe de propagation Z. De préférence, le capteur d'image présente une surface sensible élevée, typiquement supérieure à 10 mm². Dans cet exemple, le capteur d'image est un capteur IDS-UI-3160CP-M-GL comportant des pixels de 4.8x4.8 $\mu$m², la surface sensible étant de 9.2 mm x 5.76 mm, soit 53 mm².

Dans l'exemple représenté sur la figure 1, le capteur d'image 20 est optiquement couplé à l'échantillon 10 par un système optique 15. Dans l'exemple représenté, le système optique comporte un objectif $15_1$ et une lentille de tube $15_2$. Cette dernière est destinée à projeter une image formée, sur la surface sensible du capteur d'image 20 (surface de 53 mm²). La fréquence d'acquisition d'images est par exemple de 60 images par secondes, le temps de pose étant de 2 ms par image.

Dans cet exemple :

- l'objectif $15_1$ est un objectif Motic CCIS EF-N Plan Achromat 10x, d'ouverture numérique 0.25 ;
- la lentille $15_2$ est une lentille Thorlabs LBF254-075-A - focale 75 mm.

Un tel montage confère un champ d'observation de 3 $mm^2$, avec une résolution spatiale de 1 $\mu m$.

Le système optique 15 définit un plan objet $P_o$ et un plan image $P_i$. Dans le mode de réalisation représenté sur la figure 1, le capteur d'image 20 est configuré pour acquérir une image selon une configuration défocalisée. Le plan image $P_i$ est confondu avec le plan de détection $P_{20}$, tandis que le plan objet $P_o$ est décalé d'une distance de défocalisation objet $\delta$ comprise entre 10 $\mu m$ et 500 $\mu m$, par rapport à l'échantillon. La distance de défocalisation est de préférence comprise entre 50 $\mu m$ et 200 $\mu m$, par exemple 100 $\mu m$. Le plan objet $P_o$ s'étend en dehors de l'échantillon 10. Selon une autre possibilité, le plan objet s'étend dans l'échantillon, tandis que le plan image est décalé par rapport au plan de détection, d'une distance de défocalisation image. La distance de défocalisation image est de préférence comprise entre 50 $\mu m$ et 200 $\mu m$, par exemple 100 $\mu m$. Selon une autre possibilité, le plan objet $P_o$ et le plan image $P_i$ sont tous les deux décalés respectivement par rapport au plan de l'échantillon et par rapport au plan de détection. Quelle que soit la configuration retenue, la distance de défocalisation est de préférence supérieure à 10 $\mu m$ et inférieure à 1 mm, voire à 500 $\mu m$, et de préférence entre 50 $\mu m$ et 150 $\mu m$. L'observation d'un échantillon cellulaire selon une configuration défocalisée a été décrit dans le brevet US10545329.

Un avantage de l'imagerie défocalisée est qu'elle permet d'observer des particules translucides ou transparentes, selon un contraste satisfaisant.

Selon une possibilité, chaque image acquise peut faire l'objet d'un algorithme de reconstruction numérique, de façon à améliorer la résolution spatiale. On sait que le recours à des algorithmes de reconstruction numérique permet d'obtenir des images nettes de particules. De tels algorithmes sont par exemple décrits dans US10564602, US20190101484 ou US20200124586. Dans ce type d'algorithme, à partir d'un hologramme acquis dans un plan de détection, on reconstruit une image de l'échantillon dans un plan de reconstruction, distant du plan de détection. Il est usuel que le plan de reconstruction d'étende à travers l'échantillon. Cependant, ce type d'algorithme peut nécessiter un temps de calcul relativement long. L'invention s'est avérée performante, dans le cas de la caractérisation de spermatozoïdes, à partir d'images acquises par le capteur d'image (hologrammes), sans mise en œuvre de l'algorithme de reconstruction.

Il est connu que l'imagerie sans lentille, couplée à des algorithmes de reconstruction holographique, permet une observation de cellules transparentes ou translucides en conservant un champ d'observation élevé, ainsi qu'une grande profondeur de champ. Les brevets US9588037 ou US8842901 décrivent par exemple le recours à l'imagerie sans lentille pour l'observation de spermatozoïdes. Les brevets US10481076 ou US10379027 décrivent également le recours à l'imagerie sans lentille, couplée à des algorithmes de reconstruction, pour caractériser des cellules.

La figure 2 représente un deuxième mode de réalisation de dispositif 1' convenant à la mise en œuvre de l'invention. Le dispositif 1' comporte une source de lumière 11, un diffuseur 13, un diaphragme 14, un capteur d'image 20, une structure de maintien 17 et une unité de traitement 30 tels que décrits en lien avec le premier mode de réalisation. La structure de maintien 17 est configurée pour définir une distance fixe entre l'échantillon et le capteur d'image. Selon ce mode de réalisation, le dispositif ne comporte pas de lentille de formation d'image entre le capteur d'image 20 et l'échantillon 10. Le capteur d'image 20 est de préférence rapproché de l'échantillon, la distance entre le capteur d'image 20 et l'échantillon 10 étant typiquement comprise entre 100 $\mu m$ et 3 mm. Selon ce mode de réalisation, le capteur d'image acquiert des images selon une modalité d'imagerie sans lentille. L'échantillon est de préférence contenu dans une chambre fluidique $10_c$, par exemple une chambre « Leja » telle que décrite en lien avec le premier mode de réalisation. L'avantage d'un tel mode de réalisation est qu'il ne nécessite pas un positionnement précis d'un système optique 15 par rapport à l'échantillon 10, et qu'il confère un champ d'observation élevé. L'inconvénient est l'obtention d'images de moindre qualité, mais qui demeurent exploitables.

D'autres systèmes d'imagerie de diffraction ou interférométriques peuvent être mis en œuvre. Il peut par exemple s'agir de systèmes d'imagerie à contraste de phase.

Les modalités d'imagerie précédemment décrites conviennent à des particules transparentes ou translucides. Lorsque les particules sont suffisamment opaques, on peut mettre en œuvre un imageur classique, focalisé sur l'échantillon.

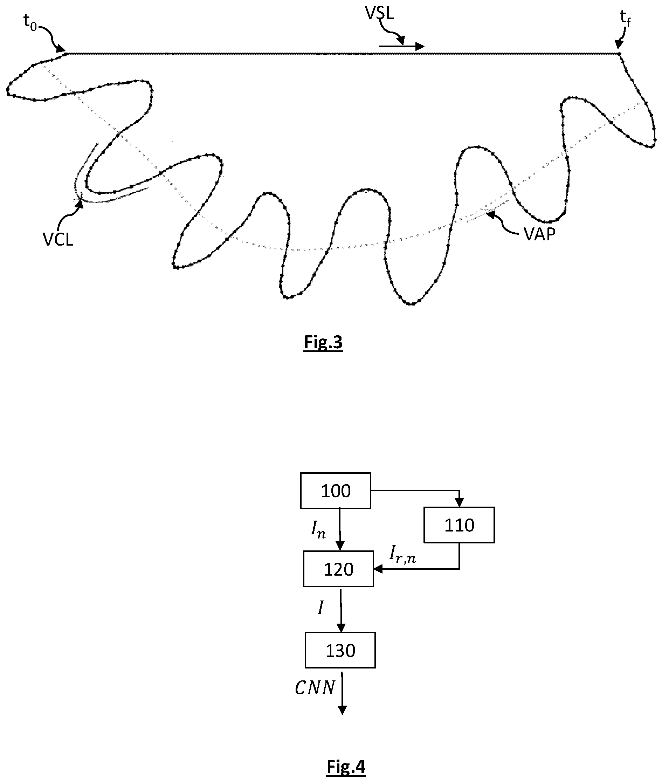

La figure 3 illustre une trajectoire d'un spermatozoïde, entre un instant initial $t_0$ et un instant final $t_f$. Chaque point illustre une position d'un spermatozoïde, à un instant $t$ entre $t_0$ et $t_f$.

A partir de la trajectoire, il est possible de caractériser le déplacement d'un spermatozoïde, en déterminant différentes caractéristiques, par exemple :

- une vitesse de la trajectoire linéaire VSL , usuellement désignée par le terme « velocity straighline path », qui correspond à la vitesse calculée sur la base d'une distance, en ligne droite, entre les premier et dernier points de la trajectoire, correspondant respectivement à l'instant initial et l'instant final de l'acquisition ;
- une vitesse de la trajectoire curvilinéaire VCL, usuellement désignée par le terme « velocity curvilinear path » : il s'agit d'une vitesse établie en sommant les distances parcourues entre deux instants successifs, et en multipliant par la fréquence d'acquisition;

- une vitesse de la trajectoire moyenne VAP, usuellement désignée par le terme « velocity average path » : il s'agit d'une vitesse établie après lissage de la trajectoire d'une particule : la distance parcourue selon la trajectoire lissée (ou trajectoire moyenne) est divisée par la durée entre l'instant initial et l'instant final. Sur la figure 3, la trajectoire moyenne a été matérialisée par des pointillés ;
- A partir des vitesses calculées, il est possible de définir des indicateurs permettant de caractériser la motilité des spermatozoïdes, connus de l'homme du métier. Il s'agit par exemple d'indicateurs de type :
- indicateur de rectitude STR, obtenu par un ratio entre VSL et VAP, usuellement désigné par le terme « straightness ». Cet indicateur est d'autant plus proche de 1 que le spermatozoïde se déplace en ligne droite ;
- indicateur de linéarité LIN, obtenu par un ratio entre VSL et VCL, usuellement désigné par le terme « linearity ». Cet indicateur est également d'autant plus proche de 1 que le spermatozoïde se déplace en line droite.

La quantification des vitesses ou paramètres listés ci-dessus permet de catégoriser les spermatozoïdes en fonction de leur motilité. Par exemple, un spermatozoïde est considéré comme :

- motile si la longueur de la trajectoire est supérieure à un premier seuil, par exemple 10 pixels, et que son déplacement le long de la trajectoire moyenne (VCLx $\Delta$t, $\Delta$t étant la période d'acquisition) est supérieure à une longueur prédéfinie, correspondant par exemple à la longueur d'une tête de spermatozoïde ;
- progressif si la longueur de la trajectoire est supérieure au premier seuil, et si la rectitude STR et la vitesse de la trajectoire moyenne VAP sont respectivement supérieures à deux valeurs seuils $STR_{th}$ et $VAP_{th1}$ ;
- lent si la longueur de la trajectoire est supérieure au premier seuil et si la vitesse de la trajectoire linéaire VSL et la vitesse de la trajectoire moyenne VAP sont respectivement inférieures à deux valeurs seuils $VSL_{th2}$ et $VAP_{th2}$ ;
- statique si la longueur de la trajectoire est supérieure au premier seuil et si la vitesse de la trajectoire linéaire VSL et la vitesse de la trajectoire moyenne VAP sont respectivement inférieures à deux valeurs seuils $VSL_{th3}$ et $VAP_{th3}$.
- non catégorisé si la longueur de la trajectoire est inférieure au premier seuil.

La figure 4 schématise les principales étapes d'un procédé de traitement de plusieurs images acquises par un capteur d'image selon la modalité d'imagerie défocalisée. Le procédé est décrit en lien avec l'observation de spermatozoïdes, étant entendu qu'il peut s'appliquer à l'observation d'autres types de particules motiles.

Etape 100 : acquisition d'une série d'images $I_n$.

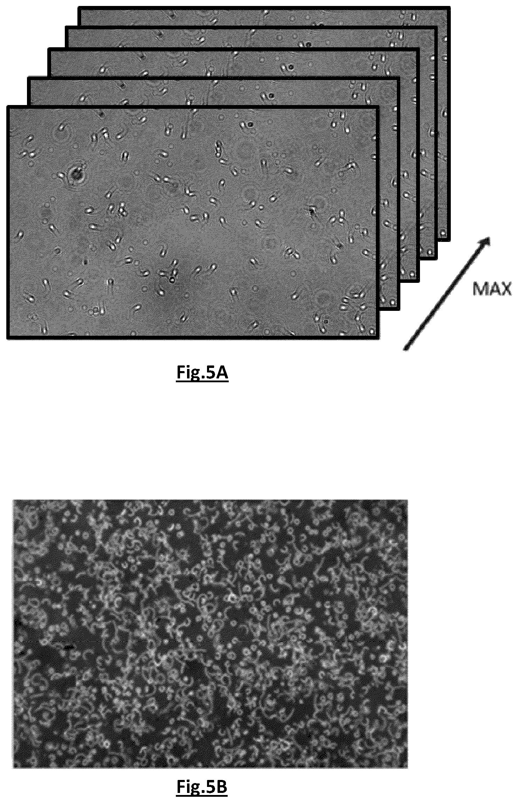

Au cours de cette étape, des images de l'échantillon sont acquises en différents instants d'acquisition $t_n$, à chaque instant correspondant une image acquise $I_n$. Les instants d'acquisition s'étendent entre un instant initial et un instant final. On obtient une pile d'images acquises, comme représenté sur la figure 5A.

Etape 110 : reconstruction holographique (étape optionnelle)

Au cours de cette étape, on applique un algorithme de reconstruction holographique à chaque image acquise $I_n$, de façon à former une image $I_{r,n}$ de l'échantillon à chaque instant d'acquisition $t_n$. Cette étape n'est pas indispensable.

Etape 120 : formation d'une image de trajectoires

Au cours de cette étape, on forme une image de trajectoires $I$. Le terme image de trajectoires désigne le fait que l'image permet d'estimer les trajectoires respectives de plusieurs particules de l'échantillon. Compte tenu de la densité de particules, l'image de trajectoires montre les positions successives de plusieurs dizaines voire plusieurs centaines ou milliers de particules, entre l'instant initial et l'instant final. L'image de trajectoires peut être formée par une combinaison des images acquises $I_n$ lors de l'étape 100 ou des images reconstruites $I_{r,n}$ au cours de l'étape 110.

Chaque image acquise $I_n$ est définie selon des pixels $r$. $r$ désigne une coordonnée dans le plan de détection défini par le capteur d'image.

Une façon d'obtenir l'image de trajectoires $I$ est de prendre, en chaque pixel $(x, y)$, une valeur extrémale de l'ensemble des images acquises $I_n$ ou reconstruites $I_{r,n}$.

Pour établir l'image de trajectoires, on peut prendre en compte la valeur maximale de chaque image acquise (ou de chaque image reconstruite).

La valeur de chaque pixel de l'image de trajectoires est alors

$$I(x, y) = \max_{n} I_n(x, y) \ (1).$$

L'obtention d'une image de trajectoires constitue un aspect important de l'invention. L'image de trajectoires montre une position des particules, dans le champ d'observation du capteur d'image, aux différents instants d'acquisition. Ainsi, sur l'image de trajectoires permet de visualiser la trajectoire des particules de l'échantillon, dans le champ d'observation, aux différents instants d'acquisition. La figure 5B montre un exemple d'image de trajectoires, obtenue par une combinaison de 30 images acquises.

Contrairement à l'art antérieur, on ne forme pas de multiples images d'une même particule, à différents instants d'acquisition. L'invention se distingue de l'art antérieur en ce qu'elle combine, sur une même image, les différentes images de l'échantillon aux différents instants d'acquisition.

Etape 130 : Détection et caractérisation du mouvement de chaque particule.

Au cours de cette étape, l'image de trajectoires est utilisée en tant que donnée d'entrée d'un algorithme de détection, configuré pour détecter les particules et éventuellement les compter. Il peut par s'agir d'un algorithme de suivi de particules (Tracking), tel que Trackmate 7, tel que décrit dans l'art antérieur.

L'image des trajectoires est également utilisée en tant que donnée d'entrée d'un algorithme de caractérisation configuré pour calculer des métriques permettant de déterminer des caractéristiques moyennes des mouvements des particules détectées. Il s'agit par exemple des caractéristiques moyennes de vitesse ou de motilité telles que précédemment décrites. L'algorithme de caractérisation peut être un algorithme d'intelligence artificielle supervisé, par exemple un réseau de neurones convolutif CNN. Il peut par exemple s'agir du réseau de neurones décrit dans Tan M. et al « EfficientNet: Rethinking Model Scaling for Convolutional Neural Networks », disponible sur arxiv.org/pdf/1905.11946. Il s'agit d'un algorithme configuré pour effectuer une tâche particulière en imagerie.

L'algorithme a fait l'objet d'un apprentissage, de façon à permettre détermination des caractéristiques moyennes VSL, VCL, VAP, STR, LIN dans l'échantillon. L'algorithme a ensuite été testé sur différents échantillons. Une particularité du test est que les concentrations de spermatozoïdes dans différents échantillons étaient variables.

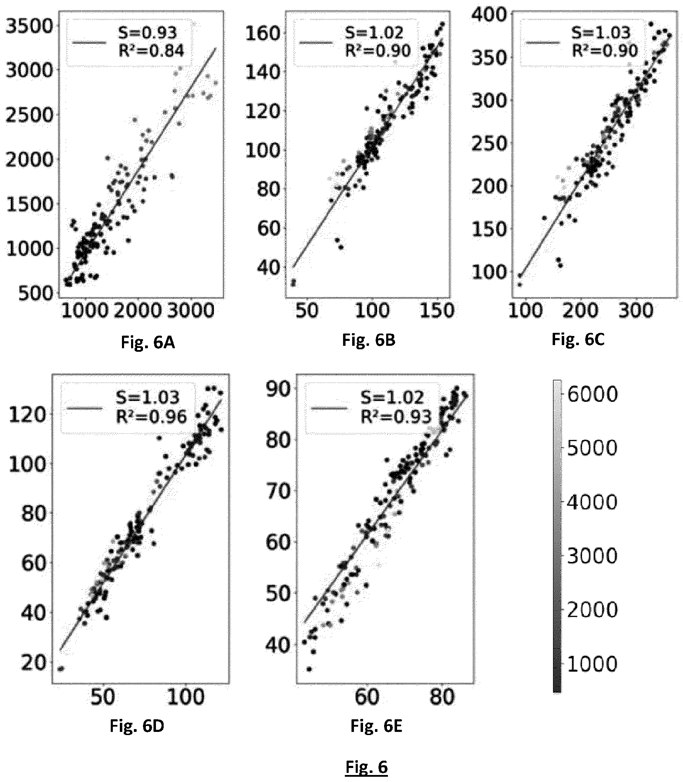

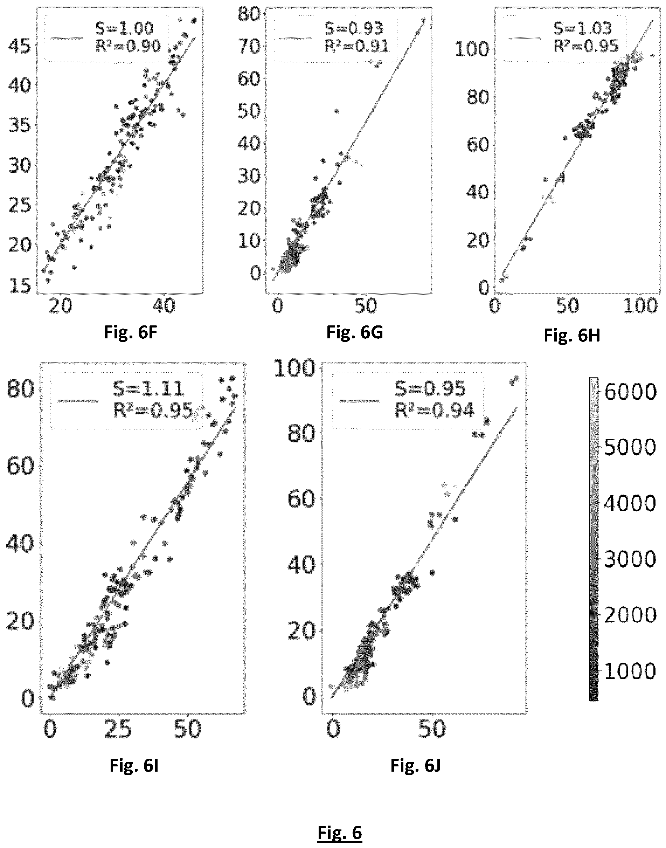

Les figures 6A à 6F montrent, respectivement pour différentes caractéristiques, les caractéristiques réelles (vérité terrain « ground truth » - axe des abscisses), en fonction des estimations en mettant en œuvre les étapes 100 à 140 précédemment décrites (axe des ordonnées). Sur la figure 6A, on a représenté le nombre de spermatozoïdes dans le champ d'observation pour différents échantillons (axe des ordonnées : estimation - axe des abscisses : vérité terrain). On observe que le nombre de spermatozoïdes observé, dans une même image, varie entre quelques centaines et environ 6000. On estime qu'une image montrant 3000 spermatozoïdes correspond à une concentration de spermatozoïdes de 60 Millions par mL. Sur la figure 6A, chaque point correspond à un échantillon.

Les caractéristiques représentées sur les figures 6B à 6F sont respectivement des valeurs moyennes de caractéristiques des trajectoires de spermatozoïdes dans les différents échantillons. Il s'agit respectivement des valeurs moyennes de VAP, VCL, VSL et STR et LIN pour les spermatozoïdes des différents échantillons. Chaque point représente un échantillon. Le niveau de gris de chaque point dépend du nombre de spermatozoïdes dans le champ d'observation, pour l'échantillon auquel appartient le spermatozoïde analysé. Pour chaque caractéristique, on a établi un modèle de régression linéaire, représenté par un trait plein. On a également calculé, pour chaque caractéristique, un coefficient de corrélation linéaire S et un coefficient de détermination linéaire R2.

Sur chacune des figures 6B à 6F, l'axe des abscisses correspond à la vérité terrain, et l'axe des ordonnées correspond à une estimation, pour chaque échantillon, obtenue en mettant en œuvre l'invention.

A partir des caractéristiques déterminées, on a déterminé un pourcentage de spermatozoïdes statiques (figure 6G), motiles (figure 6H), progressifs (figure 6I), et lents (figure 6J), et cela dans chaque échantillon. Sur les figures 6G à 6J, on montre les pourcentages estimés pour chaque catégorie de spermatozoïdes (axe des ordonnées) ainsi que les pourcentages « ground truth » obtenus en mettant en œuvre une méthode de référence, avec mise en œuvre d'un algorithme de tracking (suivi), et estimation de l'ensemble des caractéristiques de mobilité pour les différents spermatozoïdes détectés.

Le tableau 1 représente, pour chaque caractéristique étudiée, le coefficient de corrélation linéaire S et un coefficient de détermination linéaire R2.

[Tableau 1]

| paramètre | figure | S | R2 |
|---|---|---|---|
| nombre | 6A | 0.93 | 0.84 |
| VAP | 6B | 1.02 | 0.9 |
| VCL | 6C | 1.03 | 0.9 |
| VSL | 6D | 1.03 | 0.96 |
| STR | 6E | 1.02 | 0.93 |
| LIN | 6F | 1.00 | 0.90 |
| % statiques | 6G | 0.93 | 0.91 |
| % motiles | 6H | 1.03 | 0.95 |
| % progressifs | 6I | 1.11 | 0.95 |
| % lents | 6J | 0.95 | 0.94 |

Le tableau 1 montre que les coefficients de linéarité et de corrélation sont proches de 1, ce qui atteste de la pertinence de l'estimation de chaque caractéristique par l'algorithme basé sur un réseau de neurones convolutifs.

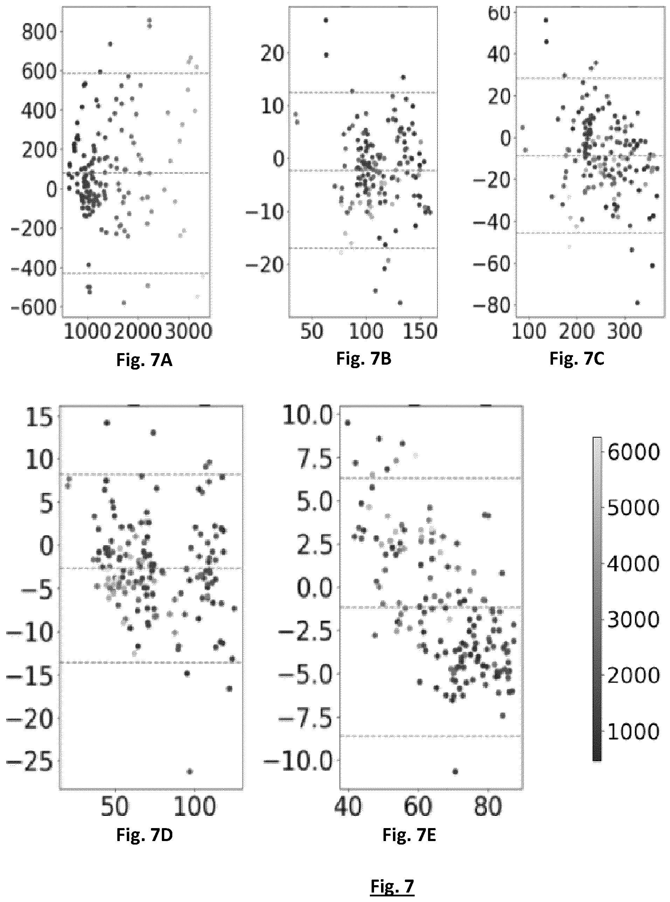

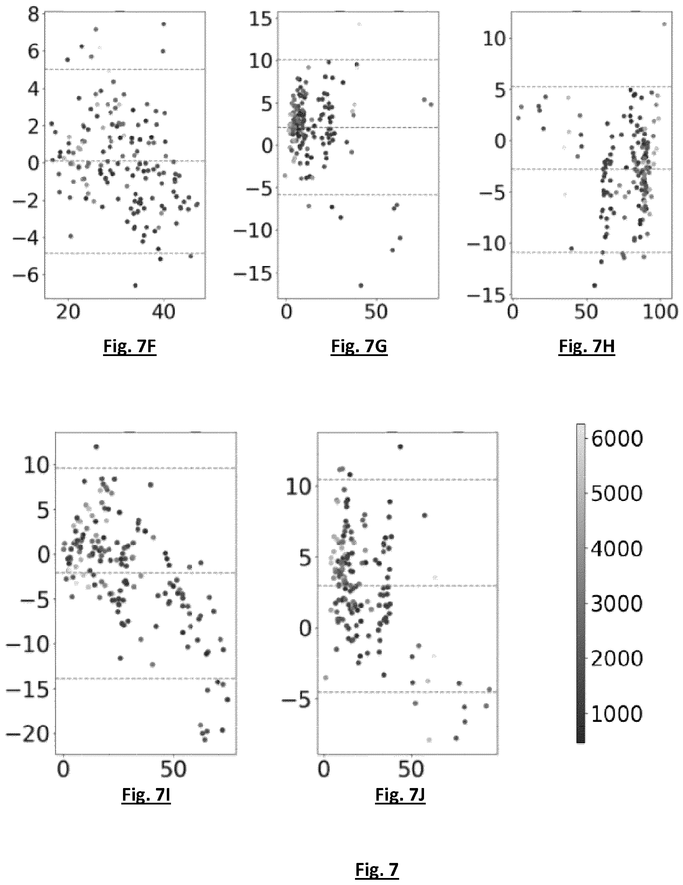

Les figures 7A à 7J sont des graphiques de Bland-Altman correspondant respectivement aux caractéristiques discutées en lien avec les figures 6A à 6J. Sur chacun de ces graphiques :

- l'axe des ordonnées montre une différence entre chaque valeur estimée et chaque valeur « ground truth » ;
- l'axe des abscisses montre une moyenne entre chaque valeur estimée et chaque valeur « ground truth » .

L'observation des figures 7A à 7J permet de conclure à l'absence de d'erreur systématique.

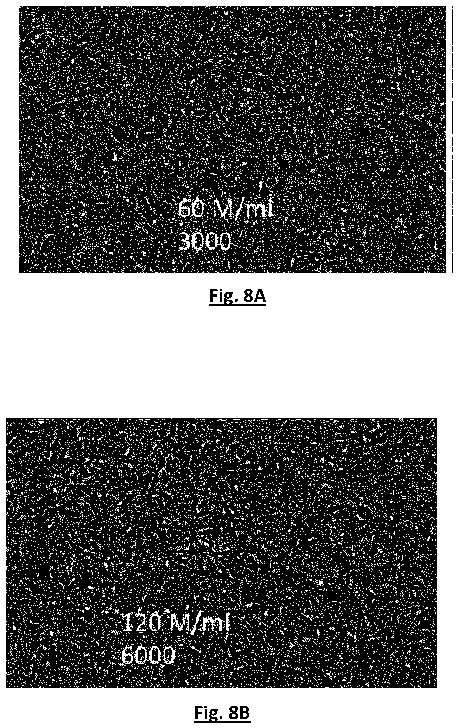

Les figures 8A et 8B représentent des exemples de portions d'images d'échantillons comportant respectivement 3000 et 6000 spermatozoïdes, ce qui correspond à des concentrations de spermatozoïdes respectivement égales à 60 M/ml et 120 M/ml. On estime que le procédé décrit ci-dessus est exploitable, dans le cas de spermatozoïdes, jusqu'à une concentration de 80 M/ml. Au-delà de cette concentration, le nombre de spermatozoïdes dans le champ d'observation du capteur d'image est trop élevé. La concentration maximale dépend de l'instrumentation utilisée ainsi que du type de particules. La concentration maximale peut être préalablement déterminée, sur la base de simulations ou d'essais expérimentaux.

Variantes

Selon une possibilité, l'image de trajectoires est formée non pas à partir des maximas de chaque image acquise $I_n$, selon (1), mais par une somme de chaque image acquise $I_n$. (ou reconstruite) Ainsi,

$$I = \sum_n I_n \quad (2)$$

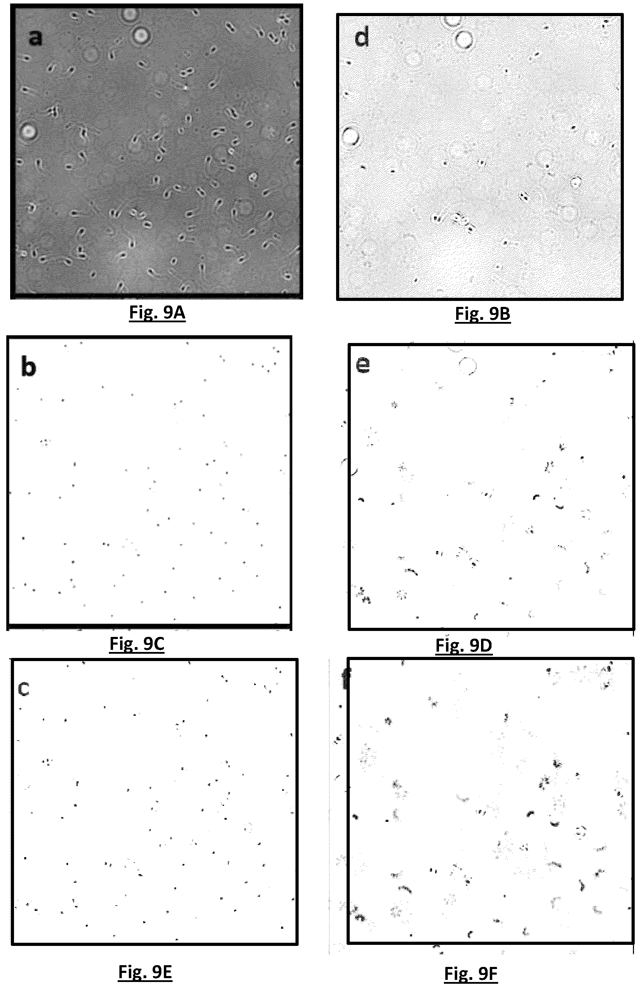

Sur la figure 9A, on a représenté un exemple d'image reconstruite. La figure 9D montre une somme de 30 images.

Dans le cas où l'image de trajectoires est formée par une sommation d'image, il est cependant préférable que chaque image sommée ait fait l'objet d'un seuillage (cf. figure 9B), ou de l'application d'une LUT (par exemple une LUT de type gamma : cf. figure 9C). Cela permet l'obtention d'images intégrées plus exploitables : cf. figure 9E (sommation d'images ayant fait l'objet d'un seuillage) ou figure 9F (sommation d'images ayant fait l'objet d'une correction avec une LUT gamma). Les images intégrées représentées sur les figures 9E et 9F sont plus exploitables.

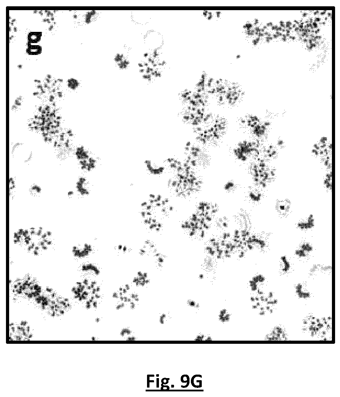

Ainsi, lors de la formation d'une image de trajectoires comme décrite dans (2), il est préférable que chaque image sommée ait fait l'objet d'un traitement préalable. L'image de trajectoires est alors comparable à une image obtenue selon (1). On a représenté, sur la figure 9G, une image obtenue selon (1), à partir d'images telles que celle représentée sur la figure 9A. Le traitement peut être effectué au niveau de la caméra ou par un logiciel

Selon une autre variante, l'image de trajectoires peut être une image acquise selon un temps de pose correspondant à la période d'acquisition. L'échantillon est alors illuminé de façon stroboscopique, par impulsions lumineuses successives, chaque impulsion lumineuse correspondant à un instant d'acquisition.

L'invention permet une caractérisation de particules mobiles dans un échantillon en mettant en œuvre un traitement rapide. Il s'agit essentiellement d'un dénombrement ou/et d'une détermination de caractéristiques liées à la trajectoire des particules dans l'échantillon. Dans le cas de spermatozoïdes, certaines trajectoires sont spécifiques d'une particularité morphologique. Il est donc possible d'obtenir des informations quant à la morphologie des spermatozoïdes par la caractérisation de leurs trajectoires. Ainsi, l'algorithme peut permettre d'obtenir, de façon indirecte, des informations morphologiques, par l'analyse des trajectoires.

**Revendications**

1. Procédé de caractérisation d'au moins une particule mobile ($10_i$) dans un échantillon (10), le procédé comportant:

   a) acquisition d'au moins une image ($I, I_n$) de l'échantillon durant une période d'acquisition, à l'aide d'un capteur d'image (20), définissant un champ d'observation, la période d'acquisition comportant différents instants d'acquisition ($t_n$);
   b) à l'aide de l'image ou de chaque image résultant de a), formation d'une image de trajectoires (I) représentant les particules de l'échantillon, dans le champ d'observation, aux différents instants d'acquisition ;
   c) utilisation de l'image de trajectoires résultant de b) en tant qu'image d'entrée d'un algorithme de détection, programmé pour détecter les particules, et d'un algorithme d'intelligence artificielle à apprentissage supervisé, programmé calculer au moins une vitesse moyenne de déplacement pour différentes particules détectées.

2. Procédé selon la revendication 1, dans lequel l'algorithme d'intelligence artificielle à apprentissage supervisé est un réseau de neurones convolutif.

3. Procédé selon l'une quelconque des revendications précédentes, dans lequel chaque image de l'échantillon étant acquise selon une modalité d'imagerie défocalisée ou selon une modalité d'imagerie sans lentille, de façon que chaque particule forme, sur chaque image, une figure de diffraction.

4. Procédé selon la revendication 3, dans lequel :

   - l'échantillon s'étend selon un plan de l'échan-

tillon ($P_{10}$);

- le capteur d'image s'étend selon un plan de détection ($P_{20}$);
- un système optique (15) s'étend entre l'échantillon et le capteur d'image, le système optique définissant un plan objet ($P_o$) et un plan image ($P_i$);
- le plan objet est décalé par rapport au plan de l'échantillon d'une distance de défocalisation objet et/ou le plan image est décalé par rapport au plan de l'échantillon d'une distance de défocalisation image, de façon que lors de l'étape a), chaque image de l'échantillon est acquise selon une modalité d'imagerie défocalisée.

5. Procédé selon la revendication 3, dans lequel aucune optique de formation d'image ne s'étend entre l'échantillon et le capteur d'image, de façon que lors de l'étape a), chaque image de l'échantillon est acquise selon une modalité d'imagerie sans lentille.

6. Procédé selon la revendication 1, dans lequel chaque image de l'échantillon est acquise selon une modalité d'imagerie interférentielle.

7. Procédé selon l'une quelconque des revendications précédentes, dans lequel :

    - l'étape (a) comporte une acquisition de plusieurs images ;
    - dans l'étape (b), l'image de trajectoires est obtenue par une combinaison des images acquises lors de l'étape (a).

8. Procédé selon la revendication 7, dans lequel la combinaison est une somme.

9. Procédé selon la revendication 7, dans lequel

    - chaque image acquise et l'image de trajectoires étant définie selon des pixels ;
    - la valeur de l'image de trajectoires pour un pixel, est la valeur maximale, audit pixel, de l'ensemble des images acquises.

10. Procédé selon l'une quelconque des revendications précédentes, dans lequel

    - chaque image acquise et l'image de trajectoires étant définie selon des pixels ;
    - la valeur de l'image de trajectoires pour un pixel, est la valeur maximale, audit pixel, de l'ensemble des images acquises.

11. Procédé selon l'une quelconque des revendications précédentes, dans lequel :

    - l'étape (a) comporte une acquisition de plusieurs images ;

- un algorithme de reconstruction holographique est appliqué à chaque image acquise, de façon à former, à partir de chaque image acquise, une image reconstruite,
- dans l'étape (b), l'image de trajectoires est obtenue par une combinaison des images reconstruites.

12. Procédé selon l'une quelconque des revendications précédentes, dans lequel

    - au cours de l'étape (a), l'image est acquise tandis que l'échantillon est soumis à plusieurs illuminations successives, chaque illumination étant effectuée à un instant d'acquisition ;
    - l'image de trajectoires correspond à l'image acquise lors de l'étape (a).

13. Procédé selon l'une quelconque des revendications précédentes, dans lequel

    - les particules sont des spermatozoïdes ;
    - l'étape c) comporte à partir de l'image de trajectoires :

        • une détermination d'au moins une caractéristique moyenne des trajectoires des spermatozoïdes durant la période d'acquisition;
        • et/ou un calcul d'une vitesse moyenne des spermatozoïdes à partir de la trajectoire.

14. Procédé selon l'une quelconque des revendications précédentes, dans lequel les particules sont motiles.

15. Dispositif (1, 1') d'observation d'un échantillon, l'échantillon comportant des particules mobiles, le dispositif comportant :

    - une source de lumière (11), configurée pour illuminer l'échantillon ;
    - un capteur d'image (20), configuré pour former une image de l'échantillon ;
    - une structure de maintien (16, 17), configurée pour maintenir l'échantillon entre la source de lumière et le capteur d'image ;
    - une unité de traitement (30), reliée au capteur d'image, et configurée pour mettre en œuvre les étapes b) et c) d'un procédé selon l'une quelconque des revendications précédentes à partir d'au moins une image acquise par le capteur d'image.

**Fig. 1**

**Fig. 2**

$t_0$ VSL $t_f$

VCL

VAP

**Fig.3**

100

110

$I_n$

$I_{r,n}$

120

$I$

130

$CNN$

**Fig.4**

Fig.5A

Fig.5B

Fig. 6A

Fig. 6B

Fig. 6C

Fig. 6D

Fig. 6E

Fig. 6

**Fig. 6F**

**Fig. 6G**

**Fig. 6H**

**Fig. 6I**

**Fig. 6J**

**Fig. 6**

Fig. 7A  Fig. 7B  Fig. 7C

Fig. 7D  Fig. 7E

Fig. 7

Fig. 7F      Fig. 7G      Fig. 7H

Fig. 7I      Fig. 7J

Fig. 7

**Fig. 8A**

**Fig. 8B**

Fig. 9A

Fig. 9B

Fig. 9C

Fig. 9D

Fig. 9E

Fig. 9F

**Fig. 9G**

**Europäisches Patentamt**
**European Patent Office**
**Office européen des brevets**

## RAPPORT DE RECHERCHE EUROPEENNE

Numéro de la demande

EP 25 19 0302

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2024/044771 A1 (ALLIER CÉDRIC [FR] ET AL) 8 février 2024 (2024-02-08) | 1,10,12, 15 | INV. G06T7/00 |
| Y | * abrégé; revendication 1; figures 1A-5C * | 2-8,11, | |
| | * alinéas [0086] - [0103] * | 13,14 | |
| A | * alinéas [0115] - [0120] * | 9 | |
| | * alinéas [0139] - [0144] * | | |
| | ----- | | |
| X | SARDANA PRANSHUL ET AL: "Deep particle diffusometry: convolutional neural networks for particle diffusometry in the presence of flow and thermal gradients", MEASUREMENT SCIENCE AND TECHNOLOGY, IOP, BRISTOL, GB, vol. 35, no. 3, 11 décembre 2023 (2023-12-11), XP020485953, ISSN: 0957-0233, DOI: 10.1088/1361-6501/AD108B [extrait le 2023-12-11] | 1,10,15 | |
| Y | * abrégé; figures 2-4 * | 2-8,11, | DOMAINES TECHNIQUES RECHERCHES (IPC) |
| | * sections 1,3,5 * | 13,14 | |
| A | | 9,12 | G06T |
| | ----- | | G01N |
| A | CHEN AO ET AL: "SVIA dataset: A new dataset of microscopic videos and images for computer-aided sperm analysis", BIOCYBERNETICS AND BIOMEDICAL ENGINEERING, vol. 42, no. 1, 1 janvier 2022 (2022-01-01), pages 204-214, XP093242561, PL ISSN: 0208-5216, DOI: 10.1016/j.bbe.2021.12.010 * abrégé; figures 1-3; tableaux 1-3 * * sections 2-4 * | 1-15 | |
| | ----- | | |

Le présent rapport a été établi pour toutes les revendications

| Lieu de la recherche | Date d'achèvement de la recherche | Examinateur |
|---|---|---|
| Munich | 23 octobre 2025 | Fronthaler, Hartwig |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**EP 4 682 823 A1**

## ANNEXE AU RAPPORT DE RECHERCHE EUROPEENNE
## RELATIF A LA DEMANDE DE BREVET EUROPEEN NO.

EP 25 19 0302

23-10-2025

| Document brevet cité au rapport de recherche | Date de publication | Membre(s) de la famille de brevet(s) | Date de publication |
|---|---|---|---|
| US 2024044771 A1 | 08-02-2024 | EP    4268120 A1 | 01-11-2023 |
| | | FR    3118169 A1 | 24-06-2022 |
| | | US 2024044771 A1 | 08-02-2024 |
| | | WO 2022136325 A1 | 30-06-2022 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20240044771 A
- US 10418399 B
- US 10545329 B
- US 10564602 B
- US 20190101484 A
- US 20200124586 A
- US 9588037 B
- US 8842901 B
- US 10481076 B
- US 10379027 B

**Littérature non-brevet citée dans la description**

- Deep particle diffusometry : convolutional neural networks for particule diffusometry in the presence of flow and thermal gradients. **PRANSHUL S.** Measurement Science and Technology. IOP, 11 December 2023
- **ERSHOV D**. TrackMate 7 : integrating state of art segmentation algorithms into tracking pipelines. *Nat Methods*, 2002, vol. 19, 829-832
- **TAN M. et al.** *EfficientNet: Rethinking Model Scaling for Convolutional Neural Networks*